# EUROPEAN PATENT APPLICATION

(11) **EP 3 742 579 A1**
(43) Date of publication of application: **25.11.2020**
(21) Application number: 20175896.8
(22) Date of filing: 21.05.2020
(51) Int. Cl.: H02J 50/12, H02J 50/40, H02J 50/50, H02J 50/70

(54) **TWO-STAGE WIRELESS POWER TRANSFER SYSTEM**

(30) Priority: 24.05.2019 CN 201910436774
(71) Applicant: NXP USA, Inc., Austin TX 78735 (US)
(72) Inventor: Wang, Dechang, Redhill, Surrey RH1 1QZ (GB); Jiang, Dengyu, Redhill, Surrey RH1 1QZ (GB); Jiang, Dan, Redhill, Surrey RH1 1QZ (GB)
(74) Representative: Miles, John Richard

(57) **Abstract**

A two-stage wireless power transfer system has three distinct components. A first component has a first-stage wireless power transmitter (TX). A second component has a first-stage wireless power receiver (RX) hardwired to a second-stage wireless power transmitter. A third component, which may be a rechargeable, battery-powered device like a cell phone, has a second-stage wireless power receiver. The first stage has TX and RX inductor coils that are substantially larger than the TX and RX coils of the second stage. A Z-gap between the first and second components can be relatively large, while still achieving relatively high overall power transfer efficiency as long as the Z-gap between the second and third components is relatively small.

## Description

### BACKGROUND

The present invention relates generally to wireless power transfer systems, such as wireless charging systems, and, more particularly, to techniques for handling high Z-gap configurations for wireless power transfer.

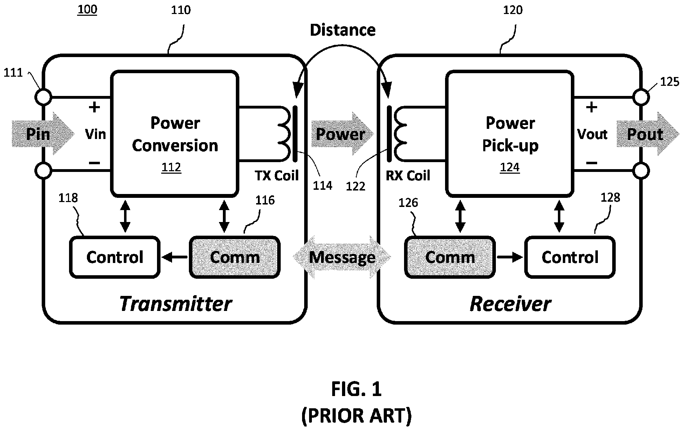

FIG. 1 is a simplified block diagram of a conventional wireless power transfer system 100 having a wireless power transmitter (TX) 110 and a wireless power receiver (RX) 120. The power transmitter 110 includes a power conversion module 112, a TX inductor coil 114, a TX communication module 116, and a TX control module 118, while the power receiver 120 includes an RX inductor coil 122, a power pick-up module 124, an RX communication module 126, and an RX control module 128.

Within the power transmitter 110, the power conversion module 112 converts DC input power Pin 111 having input voltage Vin into an AC signal that is applied to the TX inductor coil 114, which is inductively coupled to the RX inductor coil 122 of the power receiver 120. Within the power receiver 120, the power pick-up module 124 converts the analog signal induced in the RX inductor coil 122 to a DC output power Pout on an output pin 125 having output voltage Vout.
In some applications, the power receiver 120 is part of a rechargeable, battery-powered consumer device, such as a cell phone, where the DC output power Pout is used to recharge the device battery.

The TX and RX communication modules 116 and 126 transmit and receive communication messages. For example, the RX communication module 126 transmits upstream messages to the TX communication module 116 to instruct the power conversion module 112 to increase or decrease the power level of the transmitted power based on the needs of the power receiver 120. The TX and RX control modules 118 and 128 control the operations within the power transmitter and receiver 110 and 120, respectively.

Among other factors, the efficiency with which power is wirelessly transmitted from the power transmitter 110 to the power receiver 120 is a function of both the sizes of the TX and RX inductor coils 114 and 122 and the distance (also known as the Z gap) between the two coils 114 and 122. In general, the larger the coils and the shorter the distance, the higher the efficiency.

According to some wireless charging specifications, the sizes of the TX and RX inductor coils 114 and 122 are both limited, for example, to a maximum size of 70mm diameter, where diameter refers to the largest axial dimension. Note that the coils are generally circular. These maximum coil sizes limit the distance over which wireless power transfer can be achieved at a specified efficiency level. For example, with TX and RX inductor coils 114 and 122 at the 70mm diameter limit, the power transfer efficiency is less than 40% at a distance of only 40 mm. Unfortunately, in some applications, it is desirable to perform wireless power transfer over a Z gap as large as about 100 mm, at which distance the power transfer efficiency of the conventional wireless power transfer system 100 would be unacceptably low. Accordingly, it is desirable to have a wireless power transfer system that can transfer power more efficiently at distances up to or even greater than 100 mm.

### BRIEF DESCRIPTION OF THE DRAWINGS

Embodiments of the present invention are illustrated by way of example and are not limited by the accompanying figures, in which like references indicate similar elements. Elements in the figures are illustrated for simplicity and clarity and have not necessarily been drawn to scale. For example, the thicknesses of layers and regions may be exaggerated for clarity.
FIG. 1 is a simplified block diagram of a conventional wireless power transfer system;
FIG. 2 is a simplified block diagram of a two-stage wireless power transfer system according to one embodiment of the present invention; and
FIG. 3 is a simplified perspective view of one possible configuration for the two-stage power transfer system of FIG. 2.

### DETAILED DESCRIPTION

Detailed illustrative embodiments of the present invention are disclosed herein. However, specific structural and functional details disclosed herein are merely representative for purposes of describing example embodiments of the present invention. Embodiments of the present invention may be embodied in many alternative forms and should not be construed as limited to only the embodiments set forth herein. Further, the terminology used herein is for the purpose of describing particular embodiments only and is not intended to be limiting of example embodiments of the invention.

As used herein, the singular forms "a", "an", and "the", are intended to include the plural forms as well, unless the context clearly indicates otherwise. It further will be understood that the terms "comprises", "comprising", "has", "having", "includes", or "including" specify the presence of stated features, steps, or components, but do not preclude the presence or addition of one or more other features, steps, or components. It also should be noted that, in some alternative implementations, the functions/acts noted might occur out of the order noted in the figures. For example, two figures shown in succession may in fact be executed substantially concurrently or may sometimes be executed in the reverse order, depending upon the functions/acts involved. The term "or" is to be interpreted as inclusive unless indicated otherwise.

To achieve higher power transfer efficiencies over larger Z-gap distances, the present invention provides a two-stage wireless power transfer system, where a relatively large Z-gap distance is spanned by the first stage, which has relatively large TX and RX inductor coils, while the second stage, which has a relatively small TX inductor coil, spans a relatively short Z-gap distance.

In one embodiment, the present invention is an article of manufacture comprising a second component for a two-stage wireless power transfer system. The power transfer system includes (i) a first component having a first wireless power transmitter (TX) of a first stage of the power transfer system, (ii) the second component, and (iii) a third component having a second wireless power receiver (RX) of a second stage of the power transfer system. The second component comprises a first wireless power receiver of the first stage configured to receive wireless power from the first wireless power transmitter of the first component and a second wireless power transmitter of the second stage connected to receive power from the first wireless power receiver and configured to transmit wireless power to the second wireless power receiver of the third component.

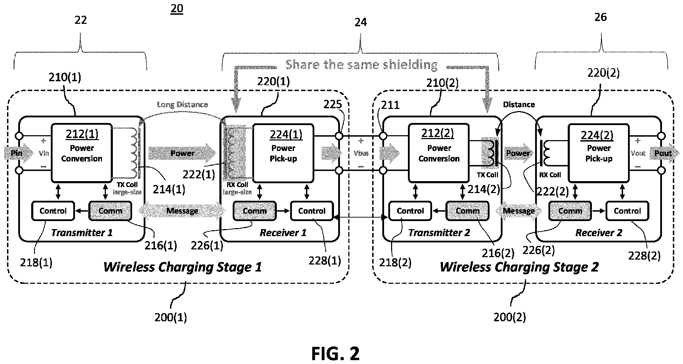

Referring now to FIG. 2, a simplified block diagram of a two-stage wireless power transfer system 20 is shown. The system 20 has first and second charging stages 200(1) and 200(2), where each charging stage 200 is substantially a different instance of the conventional power transfer system 100 of FIG. 1, with analogous labels used to identify analogous elements. As will be described in more detail below, there is a DC output at pin 225 from the first stage 200(1) that is hardwired as the DC input to the second stage 200(2) at pin 211.

In a typical implementation, the two-stage power transfer system 20 would be implemented as three distinct components: (i) a first component 22 comprising the power transmitter 210(1) of the first stage 200(1); (ii) a second component 24 comprising both the power receiver 220(1) of the first stage 200(1) and the power transmitter 210(2) of the second stage 200(2); and (iii) a third component 26 comprising the power receiver 220(2) of the second stage 200(2). Note that the third component 26 typically is implemented within a consumer device being charged, such as a cell phone or other battery-powered device.

The primary structural difference between the first and second stages 200(1) and 200(2) of the two-stage system 20 is that the TX and RX inductor coils 214(2) and 222(2) in the second stage 200(2) conform to the maximum size requirement of the applicable wireless-charging specification, while the TX and RX inductor coils 214(1) and 222(1) in the first stage 200(1) are significantly larger than that maximum size, which allows them to be spaced further apart.

For example, in an application of the two-stage power transfer system 20 for charging cell phones in which the applicable specification limits the size of the RX inductor coil inside the cell phone to 70mm diameter, the power receiver 220(2) of the second stage 200(2) is implemented inside the cell phone (i.e., the third component 26) with an RX inductor coil 222(2) no larger than 70mm diameter, while the RX inductor coil 222(1) of the first stage 200(1) is implemented in the second component 24 and has a large diameter significantly greater than 70mm. In addition, the second component 24 is implemented with a TX inductor coil 214(2) of the second stage 200(2) no larger than 70mm diameter, while the TX inductor coil 214(1) of the first stage 200(1) is implemented in the first component 22 with a large diameter significantly greater than 70mm. As such, the distance between the power transmitter 210(1) of the first stage 200(1) in the first component 22 and the power receiver 220(1) of the first stage 200(1) in the second component 24 may be relatively large, while the distance between the power transmitter 210(2) of the second stage 200(2) in the second component 24 and the power receiver 220(2) of the second stage 200(2) in the third component 26 is relatively small, while still achieving a sufficiently high overall power transfer efficiency.

Assume, for example, the desire to provide wireless cell phone charging on top of an existing conference room table or other structure made of a non-magnetic material. One option would be to deploy the conventional wireless power transfer system 100 of FIG. 1 in which the power transmitter 110 is mounted on the bottom surface of the table and a cell phone having the power receiver 120 is placed on the top surface of the table directly above the power transmitter 110. Unfortunately, for a table having a thickness larger than 250mm, the power transfer efficiency of such a configuration would be unacceptably low.

A better option is to deploy the system 20 of the present invention, where the first component 22 having the power transmitter 210(1) of the first stage 200(1) is mounted on the bottom surface of the table, the second component 24 having the power receiver 220(1) of the first stage 200(1) and the power transmitter 210(2) of the second stage 200(2) is placed on the top surface of the table above the first component 22, and the third component 26 (i.e., the cell phone) having the power receiver 220(2) of the second stage 200(2) is place on top of the second component 24.

Although, in this configuration, the Z-gap distance between the power transmitter 210(1) of the first stage 200(1) and the power receiver 220(1) of the first stage 200(1) is more than 250mm because the TX and RX inductor coils 214(1) and 222(1) are significantly larger than those allowed by the applicable specification, the power transfer efficiency of the first stage 200(1) is reasonably high. Furthermore, although the TX and RX inductor coils 214(2) and 222(2) of the second stage 200(2) are limited to the maximum size allowed by the applicable specification/standard, the power transfer efficiency of the second stage 200(2) also is reasonably high because the Z-gap distance between the power transmitter 210(2) of the second stage 200(2) and the power receiver 220(2) of the second stage 200(2) is relatively small with the cell phone placed right on top of the second component 24. Note that, even though the overall power transfer efficiency is the product of the power transfer efficiencies of the individual stages 200(1) and 200(2), the overall power transfer efficiency of the system 20 is higher than the power transfer efficiency of the conventional system 100 for large Z-gap situations.

For example, an implementation of the conventional power transfer system 100 having a 70mm TX inductor coil 114 and an RX inductor coil 122 at the 70mm diameter limit would have a power transfer efficiency of not higher than about 40% at a Z-gap distance of about 40 mm. Assume an implementation of the power transfer system 20 of FIG. 2 having a 106mm first-stage TX inductor coil 214(1), a 106mm first-stage RX inductor coil 222(1), a second-stage TX inductor coil 214(2) at the 70mm diameter limit, and a second-stage RX inductor coil 222(2) at the 70mm diameter limit. At the same Z-gap distance of about 40 mm, the power transfer efficiency of the first stage 200(1) is about 85%, while the power transfer efficiency of the second stage 200(2) having a Z-gap distance of only about 3 mm is about 75%, for an overall power transfer efficiency above about 60%.

Note that in a typical implementation, the first component 22 is plugged into an AC "wall" socket and includes an AC-to-DC converter (not shown in FIG. 2) that converts the AC power supplied from the socket to the DC input power Pin applied to the power transmitter 210(1). On the other hand, the second component 24 is a wireless device that is wirelessly powered by the first component 22 and wirelessly powers the (wireless) third component 26.

In some implementations, all the power needed to operate the second component 24 comes from the power transmitted wirelessly from the first component 22. In some alternative implementations, the second component 24 could have a battery that is charged by the power received from the first component 22, where that battery may be used to provide some of the power for operating the second component 24, while the power transmitted wirelessly to the third component 26 is directly based entirely or almost entirely on the power received wirelessly from the first component 22. In either case, the second component 24 is a wireless device that is not plugged into any hardline power supply, such as an AC wall socket.

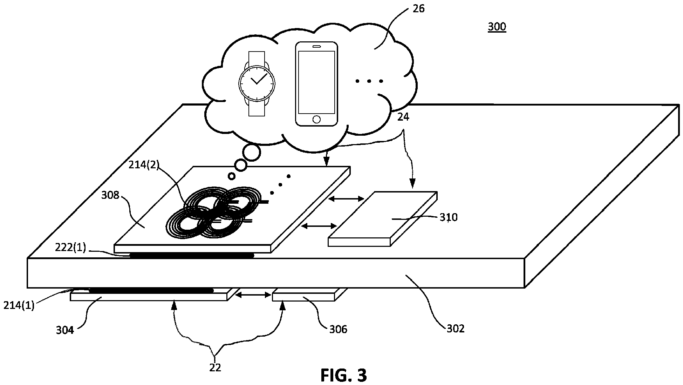

FIG. 3 is a simplified perspective view of a configuration 300 comprising an instance of the first component 22 of FIG. 2 mounted on the bottom surface of a table 302 and an instance of the second component 24 of FIG. 2 placed on the top surface of the table 302 directly above the first component 22. An instance of the third component 26 of FIG. 2, for example, a wirelessly chargeable cell phone or watch, is placed on top of the second component 24 for wireless charging.

As represented in FIG. 3, the first component 22 comprises (i) shielding 304 with a relatively large TX inductor coil 214(1) mounted on top and (ii) a first-component control and communication unit 306 that includes the power conversion, communication, and control modules 212(1), 216(1), and 218(1) of the power transmitter 210(1) of FIG. 2. The second component 24 comprises (i) shielding 308 with a relatively large RX inductor coil 222(1) mounted below the shielding 308 and at least one TX inductor coil 214(2) mounted on top of the shielding 308 and (ii) a second-component control and communication unit 310 that includes (a) the power pick-up, communication, and control modules 224(1), 226(1), and 228(1) of the power receiver 220(1) of FIG. 2 and (b) the power conversion, communication, and control modules 212(2), 216(2), and 218(2) of the power transmitter 210(2) of FIG. 2. Note that the shielding 308 provides shielding for both the RX inductor coil 222(1) of the first stage 200(1) as well as the TX inductor coil 214(2) of the second stage 200(2).

In general, the purpose of the shielding 304 and 308 is to protect other electronic components from the magnetic fields generated by the inductor coils. Thus, the shielding 304 in the first component 22 is designed to protect the electronic components in the control and communication unit 306 from the magnetic field generated by the TX inductor coil 214(1). Similarly, the shielding 308 in the second component 24 is designed to protect the electronic components in the control and communication unit 310 from the magnetic fields generated by both the RX inductor coil 222(1) and the TX inductor coil 214(2). Although not explicitly represented in FIG. 3, the shielding 304 is preferably designed to cover the TX inductor coil 214(1) on all sides except for the power-transfer face facing the RX inductor coil 222(1). Similarly, the shielding 308 is preferably designed to cover (i) the RX inductor coil 222(1) on all sides except for the power-transfer face facing the TX inductor coil 214(1) and (ii) the TX inductor coil 214(2) on all sides except for the power-transfer face facing the RX inductor coil 222(2) in the third component 26. The shieldings 304 and 308 may be made of any suitable materials such as (without limitation) a Ni-Zn or Mn-Zn ferrite of sufficient thickness to achieve the desired shielding effects.

The Z-gap distance spanned by the first stage 200(1) of the two-stage power transfer system 20 is much greater than the Z-gap distance spanned by the second stage 200(2).

In some possible implementations, the second component 24 has a single TX inductor coil 214(2) such that only one wireless device 26 can be charged at a time. In other implementations, the second component 24 has multiple TX inductor coils 214(2) so that multiple wireless devices 26 can be charged simultaneously.

Although not explicitly shown in FIG. 2, in some implementations, the second component 24 has a wired communication path between the control module 228(1) of the first-stage power receiver 220(1) and the control module 218(2) of the second-stage power transmitter 210(2) to enable coordination of the operations of the first and second stages 200(1) and 200(2). In other implementations, the control modules 228(1) and 218(2) are implemented as a single control module that controls both the RX processing of the first stage 200(1) and the TX processing of the second stage 200(2).

Although the invention has been described in the context of the two-stage wireless power transfer systems 20 of FIG. 2 in which the size of the TX inductor coil 214(2) of the second stage 200(2) is limited to the same maximum size as the RX inductor coil 222(2) of the second stage 200(2), in other implementations, the second-stage TX inductor coil 214(2) can be larger than that second-stage RX inductor coil maximum size.

In a first aspect, there is provided an article of manufacture comprising a second component for a two-stage wireless power transfer system having (i) a first component having a first wireless power transmitter (TX) of a first stage of the power transfer system, (ii) the second component, and (iii) a third component having a second wireless power receiver (RX) of a second stage of the power transfer system, wherein the second component comprises:
a first wireless power receiver of the first stage configured to receive wireless power from the first wireless power transmitter of the first component; and
a second wireless power transmitter of the second stage connected to receive power from the first wireless power receiver and configured to transmit wireless power to the second wireless power receiver of the third component.

In one or more embodiments, the article of may further comprise the first component.

In one or more embodiments, the article of may further comprise the third component.

In one or more embodiments, the second wireless power receiver of the third component has a second RX inductor coil having a size no larger than a maximum size dictated by a specification for the third component; and the first wireless power receiver of the second component has a first RX inductor coil having a size larger than the maximum size dictated by the specification for the third component.

In one or more embodiments, the second component receives all of its operating power wirelessly from the first component.

In one or more embodiments, a power output of the first wireless power receiver is hardwired to a power input of the second wireless power transmitter.

In one or more embodiments, a control module for the first wireless power receiver communicates with a control module for the second wireless power transmitter.

In one or more embodiments, the second component comprises a control module that controls operations of both the first wireless power receiver and the second wireless power transmitter.

In one or more embodiments, the first wireless power receiver has a first RX inductor coil; the second wireless power transmitter has a second TX inductor coil; and the first RX inductor coil and the second TX inductor coil share the same shielding.

In one or more embodiments, the first RX inductor coil and the second TX inductor coil are mounted on opposite sides of the same shielding.

In one or more embodiments, the second wireless power transmitter has multiple second TX inductor coils configured to charge multiple third components simultaneously.

In one or more embodiments, the third component is a rechargeable, battery-powered consumer device.

In one or more embodiments, the second wireless power receiver of the third component has a second RX inductor coil having a size no larger than a maximum size dictated by a specification for the third component; the first wireless power receiver of the second component has a first RX inductor coil having a size larger than the maximum size dictated by the specification for the third component; the second component receives all of its operating power wirelessly from the first component; a power output of the first wireless power receiver is hardwired to a power input of the second wireless power transmitter; the first wireless power receiver has a first RX inductor coil; the second wireless power transmitter has a second TX inductor coil; and the first RX inductor coil and the second TX inductor coil are mounted on opposite sides of the same shielding.

In one or more embodiments, a control module for the first wireless power receiver communicates with a control module for the second wireless power transmitter.

In one or more embodiments, the second component comprises a control module that controls operations of both the first wireless power receiver and the second wireless power transmitter.

In one or more embodiments, the second wireless power transmitter has multiple second TX inductor coils configured to charge multiple third components simultaneously.

In one or more embodiments, the third component is a rechargeable, battery-powered consumer device.

In a second aspect, there is provided a wireless charging system, comprising: a first component including a first wireless power transmitter (TX) having a first transmitter coil; and a second component including: a first wireless power receiver having a first receiver coil configured to receive wireless power from the first wireless power transmitter of the first component; and a second wireless power transmitter connected to receive power from the first wireless power receiver and having a second transmitter coil configured to transmit wireless power to a second wireless power receiver of a third component, wherein the first transmitter coil and the first receiver coil are larger than the second transmitter coil.

In one or more embodiments, when providing wireless power to the third component, a Z-gap between the first transmitter coil and the first receiver coil is larger than a Z-gap between the second transmitter coil and a second receiver coil of the second wireless power receiver of the third component.

In one or more embodiments, the second wireless power transmitter has a plurality of second transmitter coils configured to charge multiple third components simultaneously.

A two-stage wireless power transfer system has three distinct components. A first component has a first-stage wireless power transmitter (TX). A second component has a first-stage wireless power receiver (RX) hardwired to a second-stage wireless power transmitter. A third component, which may be a rechargeable, battery-powered device like a cell phone, has a second-stage wireless power receiver. The first stage has TX and RX inductor coils that are substantially larger than the TX and RX coils of the second stage. A Z-gap between the first and second components can be relatively large, while still achieving relatively high overall power transfer efficiency as long as the Z-gap between the second and third components is relatively small.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

It should be understood that the steps of the exemplary methods set forth herein are not necessarily required to be performed in the order described, and the order of the steps of such methods should be understood to be merely exemplary. Likewise, additional steps may be included in such methods, and certain steps may be omitted or combined, in methods consistent with various embodiments of the invention.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments necessarily mutually exclusive of other embodiments. The same applies to the term "implementation".

## Claims

1. An article of manufacture comprising a second component for a two-stage wireless power transfer system having (i) a first component having a first wireless power transmitter (TX) of a first stage of the power transfer system, (ii) the second component, and (iii) a third component having a second wireless power receiver (RX) of a second stage of the power transfer system, wherein the second component comprises:
a first wireless power receiver of the first stage configured to receive wireless power from the first wireless power transmitter of the first component; and
a second wireless power transmitter of the second stage connected to receive power from the first wireless power receiver and configured to transmit wireless power to the second wireless power receiver of the third component.

2. The article of claim 1, further comprising the first component.

3. The article of claim 2, further comprising the third component.

4. The article of any preceding claim, wherein:
the second wireless power receiver of the third component has a second RX inductor coil having a size no larger than a maximum size dictated by a specification for the third component; and
the first wireless power receiver of the second component has a first RX inductor coil having a size larger than the maximum size dictated by the specification for the third component.

5. The article of any preceding claim, wherein the second component receives all of its operating power wirelessly from the first component.

6. The article of any preceding claim, wherein a power output of the first wireless power receiver is hardwired to a power input of the second wireless power transmitter.

7. The article of any preceding claim, wherein a control module for the first wireless power receiver communicates with a control module for the second wireless power transmitter.

8. The article of any preceding claim, wherein the second component comprises a control module that controls operations of both the first wireless power receiver and the second wireless power transmitter.

9. The article of any preceding claim, wherein:
the first wireless power receiver has a first RX inductor coil;
the second wireless power transmitter has a second TX inductor coil; and
the first RX inductor coil and the second TX inductor coil share the same shielding.

10. The article of claim 9, wherein the first RX inductor coil and the second TX inductor coil are mounted on opposite sides of the same shielding.

11. The article of any preceding claim, wherein the second wireless power transmitter has multiple second TX inductor coils configured to charge multiple third components simultaneously.

12. The article of any preceding claim, wherein the third component is a rechargeable, battery-powered consumer device.

13. The article of any preceding claim, wherein:
the second wireless power receiver of the third component has a second RX inductor coil having a size no larger than a maximum size dictated by a specification for the third component;
the first wireless power receiver of the second component has a first RX inductor coil having a size larger than the maximum size dictated by the specification for the third component;
the second component receives all of its operating power wirelessly from the first component;
a power output of the first wireless power receiver is hardwired to a power input of the second wireless power transmitter;
the first wireless power receiver has a first RX inductor coil;
the second wireless power transmitter has a second TX inductor coil; and
the first RX inductor coil and the second TX inductor coil are mounted on opposite sides of the same shielding.

14. The article of claim 13, wherein a control module for the first wireless power receiver communicates with a control module for the second wireless power transmitter.

15. The article of claim 13 or 14, wherein the second component comprises a control module that controls operations of both the first wireless power receiver and the second wireless power transmitter.
